(19)

**Europäisches Patentamt**

**European Patent Office**

**Office européen des brevets**

(11) **EP 4 730 199 A1**

(12) **EUROPEAN PATENT APPLICATION**

(43) Date of publication:
22.04.2026 Bulletin 2026/17

(21) Application number: 24207686.7

(22) Date of filing: 21.10.2024

(51) International Patent Classification (IPC):
*G06N 3/045* (2023.01)    *G06N 3/048* (2023.01)
*G06N 3/063* (2023.01)    *G11C 7/10* (2006.01)
*G11C 7/24* (2006.01)    *H04L 9/08* (2006.01)
*H04L 9/32* (2006.01)

(52) Cooperative Patent Classification (CPC):
**G06N 3/0464; G06N 3/0495; G06N 3/094;
G11C 7/1006; G11C 7/24; H04L 9/0866;
H04L 9/3278**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: Robert Bosch GmbH
70442 Stuttgart (DE)

(72) Inventors:
• **Kirchner, Tobias**
**71642 Ludwigsburg (DE)**
• **Soliman, Taha**
**71272 Renningen (DE)**
• **Parrini, Luca**
**70178 Stuttgart (DE)**
• **Hettwer, Benjamin**
**70180 Stuttgart (DE)**

(54) **A PUF-BASED OBFUSCATION SCHEME FOR IN-MEMORY ARCHITECTURES**

(57)     An in-memory computation (IMC) circuit (116) is proposed, comprising
- an array comprising a matrix of memory cells (112) having a plurality of rows and columns, wherein memory cells (112) within the same column are connected through a common bit line and memory cells within the same row are connected through a common word line, wherein the memory cells (112) are configured for storing weights of a trained neural network architecture, wherein the order of the weights is pre-scrambled;
- at least one decoder (126) configured for outputting a number of shifting operations to be performed by each shifting register of a plurality of shifting registers (128) using a secret key;
- the plurality of shifting registers (128) configured for shifting outputs of the array according to the output of the decoder (126).

**Fig. 2**

EP 4 730 199 A1

**Description**

Prior art

Following the latest achievements of Neural Networks (NNs) in complex tasks such as image recognition and natural language processing, a growing interest has sparked in developing efficient hardware platforms to support their progress. The increasing complexity and volume of data associated with state-of-the-art NN architectures pose a significant challenge to IoT devices operating on the edge, where computational resources and storage capabilities are limited. This has led to the on-chip memories becoming a crucial constraint in terms of power consumption and latency in modern digital embedded AI accelerators. These limitations have fostered research efforts to develop novel computational paradigms that can circumvent the memory bottleneck. Non-Von Neumann architectures such as In-Memory Computing (IMC), enable logic and arithmetic operations to be performed directly in memory, hence drastically reducing the amount of data transferred to execution units.

Although IMC-based accelerators offer numerous advantages, it is essential to address the security vulnerabilities these architectures introduce, to ensure that the confidentiality of the running AI algorithm can be maintained. Potential leaks could allow an attacker to steal the intellectual property of the NN architectures without the need for datasets that are often proprietary because of their high business value. Furthermore, this information could be also used to craft more fine-grained attacks against the integrity of the algorithm. A violation of this nature could have severe consequences, as it could potentially result in the creation of hazards in safety critical applications. Prior research has demonstrated the feasibility of reverse engineering critical information about the NN architecture through attacks at the software and hardware levels. On the software level, it is possible to generate adversarial queries that reveal structural information about the NN architecture by observing the predicted outputs. This vulnerability could allow an attacker to either reveal internal attributes about the model, e.g. as described in M. Juuti et al., "PRADA: Protecting against DNN Model Stealing Attacks," Mar. 2019, arXiv:1805.02628, or even extract information about the dataset, including potentially sensitive data, used during the training phase of the algorithm, e.g. as described in B. Wu et al., "Adapting Membership Inference Attacks to GNN for Graph Classification: Approaches and Implications," Oct. 2021, arXiv:2110.08760. Adversarial queries can be crafted to build a model extraction attack that generates a surrogate NN architecture with similar behavior. In B. Wu et al., "Model Extraction Attacks on Graph Neural Networks: Taxonomy and Realization," Nov. 2021, arXiv:2010.12751 and N. Papernot et al., "Practical Black-Box Attacks against Machine Learning." ACM, Apr. 2017, pp. 506-51, it was demonstrated how this could also be achieved by treating the target NN as a black box and using the input/output to train the behavior of a second model instead of the original dataset. In contrast, hardware attacks are closely associated with the inherent vulnerabilities of the specific architectural designs of embedded AI accelerators. The non-volatile nature of the cells composing the crossbars of many of state-of-the-art IMC accelerators makes these devices inevitably vulnerable to probing attacks, as they maintain the programmed state even after the device is shut down, e.g. as described in P. Roberts, "MIT discarded hard drives yield private info," Jan. 2003, publication Title: Computerworld. These attacks involve direct access to or manipulation of the memory to extract sensitive information, as described e.g. in S. Chhabra et al., "i-NVMM: a secure non-volatile main memory system with incremental encryption," in Proceedings of the 38th annual international symposium on Computer architecture. San Jose California USA: ACM, Jun. 2011, pp. 177-188. This can be achieved by physically tampering with the memory chips or by utilizing specialized tools to read the contents of specific cell locations. Although these attacks may be considered impractical as they require de-capsulation of the device, similar results were demonstrated to be achievable also with non-invasive attacks. Similar to DRAM memories, Resistive Random-Access Memory (RRAM) technology was shown to be vulnerable to Rowhammer attacks, e.g. as described in F. Staudigl et al., "NeuroHammer: inducing bit-flips in memristive crossbar memories," in 2022 Design, Automation & Test in Europe Conference & Exhibition (DATE). IEEE, 2022, pp. 1181-1184 due to the effect of thermal crosstalk. As faults are injected in the values mapped in the cells, this leads to potential leaks of information of the running model, e.g. as described in J. Breier et al., "SNIFF: reverse engineering of neural networks with fault attacks," IEEE Transactions on Reliability, 2021.

Moreover, in Z. Wang et al., "Side-Channel Attack Analysis on In-Memory Computing Architectures," IEEE Transactions on Emerging Topics in Computing, pp. 1-13, 2023 it was demonstrated the feasibility of a side-channel attack exploiting the power consumption and execution time of the device, to extract valuable information on the structure of the network. In J. Read et al., "A Method for Reverse Engineering Neural Network Parameters from Compute-in-Memory Accelerators," in 2022 IEEE Computer Society Annual Symposium on VLSI (ISVLSI). Nicosia, Cyprus: IEEE, Jul. 2022, pp. 302-307, instead, the photonic emission of the peripheral circuits around the crossbar was exploited to reverse engineer the values of the weights mapped inside the memory. This attack was demonstrated to be successful in retrieving more than 99% of the weights of a 128x128 matrix with as little as 350 traces. These attacks highlight the importance of research into the implementation of security countermeasures specific to modern IMC architectures that will help mitigate potential threats and ensure the confidentiality of the embedded NN algorithms.

Summary

An in-memory computation (IMC) circuit, an in-memory computation based artificial intelligence accelerator and a method for in-memory computation, are disclosed which aim to reduce the disadvantages provided by the above described devices and methods and which particularly allow for increased security for in-memory computation while requiring less overhead in terms of area and power consumption.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The in-memory computation (IMC) circuit comprises

- an array comprising a matrix of memory cells having a plurality of rows and columns, wherein memory cells within the same column are connected through a common bit line and memory cells within the same row are connected through a common word line, wherein the memory cells are configured for storing weights of a trained neural network architecture, wherein the order of the weights is pre-scrambled;
- at least one decoder configured for outputting a number of shifting operations to be performed by each shifting register of a plurality of shifting registers using a secret key;
- the plurality of shifting registers configured for shifting outputs of the array according to the output of the decoder.

The neural network architecture may be implement by means of the matrix of memory cells and matrix operations. After training the neural network architecture the weights to be used for the trained neural network architecture are determined, in particular also denoted as pre-trained. The pre-scrambling may comprise reordering the pre-trained weights of the neural network architecture, in particular reordering the bits' significance prior to the deployment phase onto the IMC crossbar. The order of the weights may be pre-scrambled as follows. The weights may be programmed into the cells such that the order of columns is pre-scrambled. The order of weights may be pre-scrambled using the secret key. The secret key must be known prior to programming the weights into the array. The secret key may be used to scramble the weights such that they can later be corrected by the shifting registers, also denoted as shifter. The secret key may be specific to each hardware, e.g. as it is derived from a physical unclonable function array. The secret key may be also be chosen deliberately and be used for multiple hardware instances.

The weights programmed within the array may be deliberately put, in particular by using and/or according to the secret key, in the wrong order, e.g. in the wrong column. This scrambling may be corrected by the shifting registers using the secret key.

For example, the trained neural network is a convolutional neural network.

The shifting register may use multiple input values generated by the matrix operation of the array and may shift them according to the information contained in the secret key. For example, the plurality of shifting registers may be configured for shifting indexes of the columns according to the output of the decoder. For example, the plurality of shifting registers may be configured for shifting outputs of the columns according to the output of the decoder.

The array may comprise a plurality of columns which are used as dummy columns. The dummy columns may be unused for storing weights of the trained neural network architecture. The dummy columns may not be used by the software, in particular during training and/or deployment. The deployment process may not use some columns deliberately. In other words, in terms of hardware, these columns are treated just as every other column and the dummy columns are exactly the same as the other columns. However, the results of the dummy columns may not contribute to the neural network computation. The dummy columns may be scrambled in addition to the columns used for storing weights of the trained neural network architecture. Whether or not there are obfuscation columns at all, may be determined by the training and/or deployment process.

The secret key may be stored in a secure part of the in-memory computation circuit. For example, the secret key may be a random number stored in a secure part of the IMMMC chip (i.e., tamper-proof). The secret key may be a pre-known key, e.g. in case of operating in a trusted environment. However, other options for the secret key are possible. For example, as described in detail below, the secret key may comprise an applied challenge concatenated with bits of a response of a PUF array.

For example, the array may be an analog array. For example, the array may be a digital array. For example, the array may have a mixed architecture.

For example, the in-memory computation circuit further comprises

- a challenge input configured for applying at least one challenge to a physical unclonable function (PUF) array;

wherein the array comprises the physical unclonable function array, wherein the physical unclonable function array is configured for generating an output, wherein the decoder is configured for outputting a number of shifting operations to be performed by each shifting register of a plurality of shifting registers using the secret key, wherein the secret key comprises the challenge and the output of the physical unclonable function array;

- the plurality of shifting registers configured for shifting outputs of the array according to the output of the decoder.

For example, the PUF may receive challenge numbers. The challenge selects the output that the PUF generates. The challenge and the output are called the "secret key", which may then be used as input to the decoder. The decoder may generate the number of shift cycles to be performed by the shifting register.

For example, each memory cell comprises a ferroelectric field effect transistor (FeFET), wherein the physical unclonable function array further comprises a plurality of current sense amplifiers. The current sense amplifiers may be connected to a respective ferroelectric field effect transistor of a final row and may be configured for measuring a response of the matrix of memory cells. Other sources for secret keys are, however, possible.

Each of the current sense amplifiers may be configured for measuring a current difference between two columns, respectively.

The in-memory computation circuit may comprise at least one analog to digital converter (ADC) configured for converting an output of the current sense amplifiers into a digital form. The in-memory computation circuit may comprise an analog FeFET crossbar, mixed-signal blocks (ADC), and digital blocks such as adders.

For example, the decoder may comprise a chain of multiplexers configured for outputting the corresponding shift amount according to the secret key used as a selector. For example, the decoder may comprise a lookup table or a simple combination of boolean functions.

The in-memory computation circuit may be configured for performing a runtime encryption and/or decryption mechanism. It was found that the proposed encryption and/or decryption mechanism can effectively protect against software and hardware attacks, as will be described in more detail below. The encryption and/or decryption mechanism can be used to fully obfuscate the complete Neural Network architecture or only specific layers that are critical for the inference computation.

The present invention proposes pre-scrambling the order of the columns, e.g. to randomly shuffle the columns of the crossbar, also denoted as matrix, during the deployment phase of the algorithm parameters in the non-volatile memory of an IMC chip. This can allow masking the significance of the bits. Thus, if the value of each programmed cell is revealed, the attacker has to guess the number of shift operations required to obtain the correct result of the Multiply and Accumulate (MAC) operation. This shuffling operation can be performed not only on the output columns but also on the bits of the input signals when the values are fed serially, as in architectures, e.g. in case the crossbar is embodied as described in "FELIX: A Ferroelectric FET Based Low Power Mixed-Signal In-Memory Architecture for DNN Acceleration", Soliman et al..

The physical unclonable function array may be configured for receiving at least one selected challenge as input and the secret key is generated by using the response of the matrix. The decoder may be configured for outputting the number of shifting operations to be performed by each shifting register using the secret key. This may be performed in a residual state from the factory and/or in a state that has been programmed. For example, this may be performed in a metastable state, i.e. a state that is neither 1 nor 0, where the programming algorithm does choose the programming parameters such that that state is likely to occur. It may not verify the actual state after programming as it would normally be the case. This can allow that random states in the cells occur.

In subsequent stages of using the in-memory computation circuit, the matrix of memory cells may be configured for receiving activation inputs to be processed for the neural network architecture inference and performing multiply and accumulate computation. Each shifting register may be configured for performing a shifting operation corresponding to the output of the decoder. The decoder may use the secret key for outputting the number of shifting operations to be performed by each shifting register of a plurality of shifting register.

The in-memory computation circuit further may comprise at least one adder and/or counter configured for accumulating an output of the array. The in-memory computation circuit may be configured for transmitting the accumulated output for at least one further, e.g. digital, logic for further processing.

The proposed in-memory computation circuit may be configured for decrypting at runtime. To decrypt at runtime, a secret key may be decoded to determine the correct number of shift operations to be performed after converting the output from each column in the digital domain. This operation is performed during inference execution.

The secret key can be either the response of a PUF mechanism, such as the one implemented by "Leveraging Ferroelectric Stochasticity and In-Memory Computing for DNN IP Obfuscation", Mankali et al. or "Hardware Security Primitives using Passive RRAM Crossbar Array: Novel TRNG and PUF Designs", Singh et al., or it can be a random number stored in a secure part of the chip (i.e., tamper-proof). Other options for the secret key may be possible, too. For example, the secret key may be pre-chosen when programming or be generated alternatively. For example, the secret key may be a random number stored in a secure part of the chip.

The in-memory computation circuit may comprise at least one framework configured for detecting anomalies in the trained neural network architecture. For example, an external tool, such as FACER, see "FACER: A Universal Framework for Detecting Anomalous Operation of Deep Neural Networks", Schorn et al., can be combined with the running neural network architecture to perform the inference computation. Whenever an anomalous input that could potentially correspond to an adversarial example is fed to the neural network, a flag signal may be raised to the decoder. This may cause all the output values of the crossbar to be shifted out, disrupting the prediction calculation in the neural network. This can allow preventing an attacker from extracting valuable information on the algorithm's architecture through the inspection of the output.

The invention further proposes an in-memory computation based artificial intelligence accelerator comprising a pipeline of a plurality of in-memory computation circuits according to the present invention. With respect to definitions and embodiments of the in-memory computation based artificial intelligence accelerator reference is made to the description of the in-memory computation circuit as described above or in more detail below.

The artificial intelligence accelerator may comprise at least one control unit configured for controlling the pipeline of in-memory computation circuits. The control unit may be configured for initiating the pipeline and/or generating the different control signals for different system blocks such as shifting and resetting signals. The control unit may be embodied as described in e.g. T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1- 25, Nov. 2022.

The invention further proposes a method for in-memory computation.

In the method an in-memory computation circuit according to the present invention is used. With respect to definitions and embodiments of the method reference is made to the description of the in-memory computation circuit as described above or in more detail below. The method comprises the following method steps, which, as an example, may be performed in the given order. However, a different order is also feasible. Further, it is possible to perform two or more of the method steps simultaneously or in a fashion overlapping in time. Further, it is also possible to perform one, more than one or even all of the method steps repeatedly.

The method comprises the following steps:

  i. retrieving a secure key;
  ii. outputting by the decoder a number of shifting operations to be performed by each shifting register using the secret key;
  iii. transmitting the output of the decoder to the shifting registers.

The bits' significance of the trained neural network architecture has been reordered prior to the deployment phase onto the IMC crossbar. The method may be used for de-obfuscating the pre-trained weights of the neural network architecture.

Step i. may comprise retrieving at least one challenge by using the challenge input and applying the challenge to a physical unclonable function array of the in-memory computation circuit. The method further may comprise measuring an output of the physical unclonable function array. Step ii. may comprise outputting by the decoder a number of shifting operations to be performed by each shifting register using the challenge and the output of the physical unclonable function array as the secret key.

The method may further comprise shifting the columns by using the shifting registers according to the output of the decoder.

The method may further comprise pre-scrambling the weights of the trained neural network architecture according to a secret key and storing the pre-scrambled weights into the array of the in-memory computation circuit, in particular during a deployment phase of the algorithm parameters in a non-volatile memory of the IMC chip. Thus, the pre-scrambling may be performed before step i. of the method. The secret key may be pre-known before scrambling.

The method can be used to fully obfuscate the Neural Network architecture or only specific layers that are critical for the inference computation.

The present invention proposes a novel security countermeasure and defense mechanism that may perform a runtime de-obfuscation of values that are mapped onto the physical unclonable function array, also denoted as IMC crossbar, into predefined positions. In the majority of IMC architectures, each crossbar's column performs only a partial bit representation of the Multiply and Accumulate (MAC) operation. This feature can be exploited to obfuscate the design and disguise the bit significance of each value by shuffling the indexes of the columns. The present invention can allow the authorized user to obtain a coherent inference computation while maintaining the confidentiality of the algorithm against the previously described attacks, even after the device is powered off. This can be achieved by performing the appropriate number of shifting operations on each MAC result before propagating it to the subsequent neural network layer. This number may be represented by a specific sequence of bits that constitute the secret key, which is forwarded to the registers at the end of each crossbar column. As the length of the key may scale according to the depth of the neural network, the size of a tamper-proof secure area that would be required to store it would generate a significant overhead. Transmission ways to transmit the key to the edge device, such as cloud communication, may be unpractical or potentially at risk of eavesdropping, as described in F. Rottenberg et al., "CSI-Based Versus RSS-Based Secret-Key Generation Under Correlated Eavesdropping," IEEE Trans. Commun., vol. 69, no. 3, pp. 1868-1881, Mar. 2021. Therefore, the present invention, in one embodiment, proposes integrating a Ferroelectric Field-Effect Transistor (FeFET) based Physically-Unclonable Function (PUF) and using the extracted responses as digital fingerprints. Suitability of FeFETs for PUF is shown e.g. in X. Guo et al., "Exploiting FeFET Switching Stochasticity for Low-Power Reconfigurable Physical Unclonable Function," in ESSCIRC 2021- IEEE 47th European Solid State Circuits Conference (ESSCIRC),Grenoble, France: IEEE, Sep. 2021, pp. 119-122. FeFETs were found to have suitable properties and are inherent stochasticity, FeFET PUFs have been demonstrated to generate reliable and unpredictable responses to predefined challenges. The present invention exploits the combinations of these values to generate secure secret keys, which can be used to disclose the correct amount of shifts for each column's output during runtime. In particular, the present invention proposes a novel FeFET-based PUF design to generate secure and reliable secret keys with minimal overhead. An efficient runtime de-obfuscation mechanism for secure computations of IMC-based AI accelerators can be achieved, by applying custom shifting operations on the results of each MAC operation. A design space exploration method will be described which can be used to identify the minimal overhead required by the PUF design, according to the degree of security provided against different attack strategies.

The challenge input may be an arbitrary input for the physical unclonable function array. The challenge may be selectable, e.g. by a control unit.

The Convolutional Neural Network, e.g. as described in T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1-25, Nov. 2022 may be a class of deep neural networks (DNNs). The Convolutional Neural Network may comprise of three types of layers: Convolutional, Pooling, and Fully Connected. Convolutional layers may use sets of kernels or weights to process input feature maps and produce output feature maps. Convolutional layers may be the core elements of these architectures. Each element out(x, y, z) of the output feature map may be calculated using the following equation:

$$out(x, y, z) = \sum_{i=0}^{k-1} \sum_{j=0}^{k-1} \sum_{h=0}^{Cin} act_{in}(x + i, y + j, h) w_z(i, j, h), \qquad (1)$$

wherin the variables $act_{in}$ and $w_z$ correspond to the inputs and the weights of the kernel at depth z. The indexes k and Cin represent the kernel size and the depth of the input feature map respectively. The core operation described by this equation is commonly referred to as MAC, which is responsible for the majority of the computational workload.

State-of-the-art artificial intelligence (AI) hardware accelerators, e.g. as described in T. Chen et al., "DianNao: A Small-Footprint High-Throughput Accelerator for Ubiquitous Machine-Learning.", are usually designed to distribute the task into multiple execution units, called Processing Elements (PEs), each of which computes in parallel a partial subset of the workload within independent clusters. IMC-based embedded AI accelerators replace the digital logic required for the arithmetic calculations encapsulated in each PE with a matrix, also denoted as crossbar. The terms in-memory computation circuit and PE may be used interchangeable herein.

Each crossbar comprises a matrix of several memory cells storing a partial bit representation of the weights of the (pre-)trained neural network architecture. Cells within the same column and row of the matrix are connected through a shared vertical, also denoted as word line, and horizontal, also denoted as bit line, output wire. As the input activations are re-routed to each row, the corresponding signal may be propagated to each memory cell which multiplies the two values. The results may then be accumulated on each shared column before being processed by the peripheral circuits surrounding the crossbar. The computed MAC calculation can be carried out in different domains, depending on the characteristics of the cell and the nature of the peripheral circuits.

Emerging technologies for non-volatile cells such as FeFET, can allow for a more efficient parallel MAC calculation performed in analog/mixed domains. However, due to the immaturity in the manufacturing process and the analog fluctuations in the device, it is very challenging to map the full value of each weight to the resistive state of a single cell with high accuracy. Moreover, the process of converting the accumulated analog signal into the digital domain would require a very high-precision Analog to Digital Converter (ADC), which often constitutes a major performance bottleneck in these architectures A. Shafiee et al., "ISAAC: A Convolutional Neural Network Accelerator with In-Situ Analog Arithmetic in Crossbars." IEEE, Jun. 2016, pp. 14-26. This overhead can be mitigated at the hardware level by allocating more resources and distributing the computational complexity of the MAC operations. This can be carried out, for instance, by partitioning on the bit level the arithmetic multiplication into smaller operands, e.g. as described in A. S. Rekhi et al., "Analog/Mixed-Signal Hardware Error Modeling for Deep Learning Inference," in Proceedings of the 56th Annual Design Automation Conference 2019. Las Vegas NV USA: ACM, Jun. 2019, pp. 1-6 and C. D. I. Parra et al., "Increasing Throughput of In-Memory DNN Accelerators by Flexible Layerwise DNN Approximation," IEEE Micro, vol. 42, no. 6, pp. 17-24, Nov. 2022. For example, it is possible to perform the bit decomposition of the MAC operations from Equation (1) in the following way:

$$out_p^c = \left( \sum_{r=0}^{quan} \left( \sum_{i=0}^{k-1} act_{i_p}^c * w_{i_r} \right) \ll r \right) \qquad (2)$$

$$out = \left( \sum_{c}^{D/k} \left( \sum_{p=0}^{P} out_p^c \right) \ll p \right) \qquad (3)$$

wherein, in equation (2), $act_{i_p}^c$ and $w_{i_r}$ are respectively the p bit of the i input activation at cycle c and r bit of the ith kernel's weight, k is the number of parallel MAC operations for each cycle, quant is the quantization utilized for the weights parameters and $out_p^c$ is the partial p bit representation of the output feature map calculated at the c cycle. In equation (3), P is the quantization used to represent the input activation, and D is the total number of MAC operations required to calculate out, representing the full output feature map. As shown in e.g. T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1-25, Nov. 2022 and Q. Dong et al., "15.3 A 351 TOPS/W and 372.4GOPS Compute-in-Memory SRAM Macro in 7nm FinFET CMOS for Machine-Learning Applications," in 2020 IEEE International Solid-State Circuits Conference - (ISSCC). San Francisco, CA, USA: IEEE, Feb. 2020, pp. 242-244, these architectures can leverage the bit decomposition of the MAC operations to optimize the ADC overhead and overcome the technology limitations. They opt for a binary representation for each cell, mapping to each column of the crossbar a specific bit's significance representation, and allocating digital adders and shifters as peripheral circuits that perform the operations described in equations (2) and (3).

As outlined above, each memory cell may comprise a ferroelectric field effect transistor (FeFET). FeFETs may be fabricated by depositing a ferroelectric material, such as hafnium oxide ($HfO_2$), as the ferroelectric layer (FE layer) atop the gate insulator, typically silicon dioxide ($SiO_2$), in conventional metal-oxide-semiconductor field-effect transistors (MOSFETs). The ferroelectric materials' non-centrosymmetric structure may result in spontaneous polarization within their unit cells, creating a net dipole moment that can be re-oriented by an external electric field. This reorientable dipole moment in the FE layer may enable modulation of the threshold voltage ($V_{TH}$) of the underlying transistor. The FeFET exhibits two stable polarization states, low $V_{TH}$ (LVT) and high $V_{TH}$ (HVT), depending on the magnitude and polarity of the programming pulses applied to the gate terminal. These two polarization states may be retained even after the gate pulse is withdrawn, enabling their use as non-volatile memory devices. This retention may allow FeFETs to store information in the form of polarization states, determined by the applied write or programming pulse. The FE layer may comprise multiple domains, each contributing to the overall polarization. The switching behavior of these domains may be influenced by the magnitude of the programming pulse. As the magnitude of the applied programming voltage increases, a greater number of domains may align their polarization with the field direction. This multi-domain switching mechanism can create intermediate $V_{TH}$ states between the low threshold voltage (LVT) and high threshold voltage (HVT) states, depending on the intensity of the applied programming voltage.

A physical unclonable function array (PUF) may be a hardware security primitive configured for generating device-specific challenge-response pairs (CRPs) based on process variations and non-idealities of the underlying technology. The PUF may be embodied as described in S. Singh et al., "Hardware Security Primitives using Passive RRAM Crossbar Array: Novel TRNG and PUF Designs," 2022, eprint: 2211.03526. Conventional CMOS-based PUFs utilize the inherent device-to-device variations introduced during fabrication. However, once fabricated, the randomness of these device characteristics remains fixed and immutable, potentially compromising the long-term reliability and effectiveness of PUFs as they cannot adapt to evolving security requirements. Non-volatile memories such as RRAM, Spin-Transfer Torque Magnetic RAM (STT-MRAM), and FeFETs offer a promising approach for developing reconfigurable PUFs.These technologies exhibit inherent cycle-to-cycle (C2C) variations within devices, providing a cost-effective means for dynamic reconfiguration, thereby enhancing customizable security solutions. For example, the FeFETs may be HfO2-based FeFETs. HfO2-based FeFETs are compatible with CMOS technology, have a high ION/IOFF ratio, an efficient power utilization, and electric field-dependent programming capability.

The switching dynamics of FeFETs may exhibit inherent stochastic behavior, meaning that the polarization state of the ferroelectric (FE) layer can vary among devices even when subjected to identical programming pulses. This randomness in polarization switching results in different drain currents (IDS) for the same programming pulse across different devices. Additionally, FeFETs may exhibit significant device-to-device variability, contributing to a notable standard deviation in their VTH distribution. Combined with the stochastic nature of polarization switching, this variability can be harnessed for generating challenge-response pairs (CRPs) in hardware security applications.

An enrollment scheme of the PUF array may be performed as follows. The FeFET-based CRP generation array may utilize an enrollment phase to assign specific $V_{TH}$ states to each FeFET using differential IDS sensing and re-programming techniques. The process may begin with applying an intermediate write pulse that partially switches the polarization of all FeFETs, creating slight variations in $V_{TH}$ and IDS due to inherent stochastic switching. A differential amplifier may be used to measure the IDS differences between paired FeFETs. This process may be repeated across all FeFET pairs in the array, resulting in a unique $V_{TH}$ map for each enrollment phase. The highly re-configurable nature of this scheme may allow for a completely new $V_{TH}$ distribution to be generated in each subsequent enrollment phase, characterized by its cycle-to-cycle randomness.

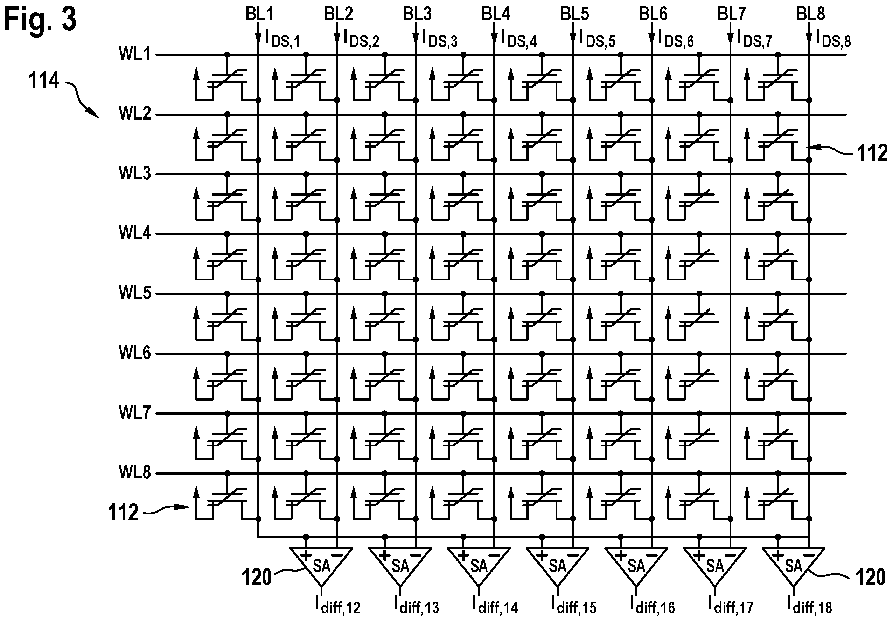

The IMC circuit may be configured for CRP evaluation. After the enrollment phase, the IMC circuit may be ready for CRP generation. Due to substantial device-to-device variation, FeFETs demonstrate unique IDS values even when programmed to the same state during the enrollment phase. To generate distinct CRPs, the differential currents between bit-lines (BLs) may be calculated within the crossbar array across all possible combinations. This can be achieved using sense amplifiers, with each sense amplifier evaluating the difference in current as $I_{diff,xy}=I_{DS,x} - I_{DS,y}$. wherein $I_{DS,x}$ and $I_{DS,y}$ denote the cumulative currents flowing through the array's respective bit-lines BLx and BLy. In the case of an $8 \times 8$ crossbar array, this results in a total of 28 distinct current difference combinations across the 8 BLs. For clarity, we have illustrated the current difference specific to BL1 in Fig. 3, which employs 7 sense amplifiers. The intrinsic variability of the FeFETs ensures that this configuration produces unique Idiff,xy responses for every possible challenge input, thereby facilitating the generation of robust and distinctive CRPs.

After having obtained the response from the PUF array, a secret key may be generated by concatenating the bits of the CRPs. This vector of bits may be then forwarded to the decoder that receives as input the secret key and outputs a combination corresponding to the number of shifting operations to be performed by each register. When the key is composed of an expected CRPs the decoder outputs the correct combination necessary to compute a coherent inference. The internal structure of the decoder can be of different kinds. For instance, it could be implemented an AES encryption scheme, e.g. as described in M. J. Dworkin, "Advanced Encryption Standard (AES)," National Institute of Standards and Technology (U.S.), Gaithersburg, MD, Tech. Rep. NIST FIPS 197-upd1, May 2023, that generates the combinations as plaintext when a key is applied to a specific string of bits previously stored. The decoder may, for example, be implemented as a device specific Programmable Logic Array, e.g. as described in Kambayashi, "Logic Design of Programmable Logic Arrays," IEEE Trans. Comput., vol. C-28, no. 9, pp. 609-617, Sep. 1979, or as a small SRAM-IMC crossbar, e.g. as described in S. Huang et al., "New security challenges on machine learning inference engine: Chip cloning and model reverse engineering," arXiv preprint arXiv:2003.09739, 2020. The choice of the most optimal configuration for the decoder may be selected according to the requirements.

The output of the decoder may then be connected to the shifting registers. Shifting resistors may be implemented, for instance, as Barrel Shifters, e.g. as described in M. R. Pillmeier et al., "Design alternatives for barrel shifters," F. T. Luk,Ed., Seattle, WA, Dec. 2002, p. 436., at the end of each crossbars' column. These components may be implemented to compute a combinatorial shift of the input value, of a number of times specified as additional input parameter. Non-secure IMC architectures with binary cells such as described in X. Zhang et al., "FSPA: An FeFET-based Sparse Matrix-Dense Vector Multiplication Accelerator," in 2023 60th ACM/IEEE Design Automation Conference (DAC). San Francisco, CA, USA: IEEE, Jul. 2023, pp. 1-6, Y. Long et al., "A Ferroelectric FET-Based Processing-in-Memory Architecture for DNN Acceleration," IEEE J. Explor. Solid-State Comput. Devices Circuits, vol. 5, no. 2, pp. 113-122, Dec. 2019, and T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1- 25, Nov. 2022, usually comprise some type of shifting operations after each MAC operation. Consequently, the inclusion of these components does not result in an additional area overhead.

IMC architectures may operate within the analog/mixed signals domains and may perform the MAC calculations using the plaintext values of the parameters. Consequently, to ensure that the weights of the neural network architecture remain stored in a fully encrypted format, it would be necessary to perform frequent cycles of decryption and encryption at runtime. This process would not only be detrimental to the aging of the cells but would also require the introduction of additional peripheral circuits that yields large area and energy overhead. In Y. Cai et al., "Enabling Secure in-Memory Neural Network Computing by Sparse Fast Gradient Encryption." in ICCAD, 2019, pp. 1-8, a Sparse Fast Gradient Encryption of the weights that are most critical for the computation of the final prediction has been proposed. The weights are decrypted at runtime to perform the inference calculations with plaintext values and then they are re-encrypted after use. This design ensures security against direct cell read-out attacks even after shutdown. However, if the chip is suddenly powered off during execution, some parts of the device may remain vulnerable to attacks. In addition, the issue of requiring multiple rewrites of the encrypted and decrypted values in the memory would remain unresolved and that would have a detrimental effect on the aging process of the FeFET cells. To avoid the necessity of frequent rewrites, multiple works proposed cell-level XOR-encryption mechanisms for SRAMs, e.g. S. Huang et al., "XOR-CIM: compute-in-memory SRAM architecture with embedded XOR encryption." ACM, Nov. 2020, pp. 1-6, FeFET, e.g. H. Shao et al., "IMCE: An In-Memory Computing and Encrypting Hardware Architecture for Robust Edge Security."], Fin Field-Effect Transistor (FinFET) J. Luo et al., "Novel Ferroelectric Tunnel FinFET based Encryption embedded Computing-in-Memory for Secure AI with High Area-and Energy-Efficiency." IEEE, Dec. 2022, pp. 36.5.1-36.5.4, and RRAM technologies, e.g. W. Li et al., "Secure-RRAM: A 40nm 16kb Compute-in-Memory Macro with Reconfigurability, Sparsity Control, and Embedded Security." IEEE, Apr. 2021, pp. 1-2, to map the neural network architecture on the memory in its encrypted form. Although this countermeasure fully protects the design from cell read-out even during run-time execution, the analog results are computed in plaintext form. In this case, the peripheral circuit's side-channel information is correlated with the elaborated outputs of the crossbar columns. As a result, the secret weight parameters can be reverse-engineered through a side-channel attack, e.g. as described in Z. Wang et al., "Side-Channel Attack Analysis on In-Memory Computing Architectures," IEEE Transactions on Emerging Topics in Computing, pp. 1-13, 2023. Another solution to overcome the costs of performing runtime secure computations is to obfuscate the values mapped in the design. For example, in Y. Wang et al., "A Low Cost Weight Obfuscation Scheme for Security Enhancement of ReRAM Based Neural Network Accelerators." ACM, Jan. 2021, pp. 499-504 and M. Zou et al., "Security enhancement for rram computing system through obfuscating crossbar row connections," in 2020 Design, Automation & Test in Europe Conference & Exhibition (DATE). IEEE, 2020, pp. 466-471m this is done respectively by disguising connections between the rows or columns of different IMC crossbars. The true position of the values is revealed at runtime using a secret key as a selector for large multiplexers, which then forward the values to the corresponding connections. Alternatively, in J. Zhang et al., "WESCO: Weight-encoded Reliability and Security Codesign for In-memory Computing Systems." IEEE, Jul. 2022, pp. 296- 301 it is proposed an obfuscation mechanism that involves the bit-swapping of the mapped weights. The same encoding procedure may be applied to each crossbar row and its corresponding input to maintain consistent matrix multiplications. The drawbacks of these implementations are related to the overhead in terms of area, latency, and power consumption caused by the additional circuitry required or the number of redundant cycles to implement the same operations for different encodings. Moreover, if the number of potential combinations is constrained, the design remains vulnerable to potential side-channel attacks targeting restricted areas of the chip. Conversely, if the design is excessively complex, new significant architectural constraints would necessitate complex signal rerouting. All the previously described countermeasures, however, do not defend from software threats such as adversarial and model stealing attacks. In S. Huang et al., "New security challenges on machine learning inference engine: Chip cloning and model reverse engineering," arXiv preprint arXiv:2003.09739, 2020. a countermeasure is presented based on the NN fine-tuning of the model to include the device-specific non-idealities in a PUF fashion. More specifically the models are retrained to adapt them to the offset variations of the implemented ADCs, so that they become unique and unclonable. In case the model is stolen and is run with different or no variations, the accuracy drops in the range from 20 to 75%, depending on the type and the technology of the ADCs. However, this countermeasure necessitates costly ad-hoc retrainings each time the model is deployed on a different chip. In L. Mankali et al., "Leveraging Ferroelectric Stochasticity and In- Memory Computing for DNN IP Obfuscation," IEEE J. Explor. Solid-State Comput. Devices Circuits, vol. 8, no. 2, pp. 102-110, Dec. 2022., the responses obtained from a FeFET based PUF architecture were exploited to decode the values of the weights pre-mapped without the need of further retraining. This mechanism can be implemented as a defense feature, that corrupts the values after the detection of an adversarial attack, but it leaves the design vulnerable against hardware attacks on the peripheral circuits as the MAC computation is performed using plaintext values.

The in-memory computation circuits of the pipeline of in-memory computation circuits (i.e. each cluster of the pipeline) may, in particular from the architectural perspective, be implemented in an identical way to the one without any security counter measures. Each PE may comprise a matrix that is connected to the same input signals and each output column is converted to the digital domain and then shifted by n positions according to the bits' significance it represents. The order of the significance of the bits represented by each column may be scrambled prior to the deployment on the device. The adopted shuffled configuration may then be known to the service provider, but not by the users. The column-specific bits significance may be only disclosed at runtime, using the correct key provided by the device-specific CRPs of the PUF. An unauthorized user who maliciously tries to steal the information of the architecture would need to guess the correct combinations of shifting operations to be performed at the end of each column to perform a meaningful inference. In the worst case, an attacker can identify the columns belonging to each PE by observing the peripheral circuitry and the power side-channel analysis of each crossbar, e.g. as described in Z. Wang et al., "Side-Channel Attack Analysis on In-Memory Computing Architectures," IEEE Transactions on Emerging Topics in Computing, pp. 1-13, 2023. This would leave him a number of combinations for each cluster that can be calculated using the following formula:

$$\left(n_{quant}!\right)^{N_{PEs}} \qquad (4)$$

wherein $n_{quant}$ is is the quantization utilized for the deployed neural network parameters and $N_{PEs}$ is the number of PEs present on each cluster.

The physical unclonable function array may comprise a plurality of dummy columns unused for storing weights of the trained, e.g. convolutional, neural network architecture. The dummy columns may be scrambled in addition to the columns used for storing weights of the trained, e.g. convolutional, neural network architecture. As the parameters of equation (4) are highly dependent on the use case of the device, the number of possible combinations could be not high enough to guarantee a satisfying degree of protection. For this reason, it is proposed to activate additional "dummy columns" in each PE during the runtime inference computation to increase the number of combinations to be guessed.

These redundant columns can map either random values or the unused weights from other layers to avoid the introduction of further area overhead. At the end of each cycle the secret key propagates to the shift register mapping the computed "dummy" MAC values a number of shifting operations higher or equal to the quantization utilized for each result. This can lead to an overflow in the register that zeroes the values adding no contribution to the computed inference. In this case, the number of combinations to be guessed can be calculated using the following formula:

$$\left(\frac{(n_{quant}+n_{dummy})!}{n_{dummy}!}\right)^{N_{PEs}} \qquad (5)$$

wherein $n_{dummy}$ is the number of "dummy columns" introduced.

The method and devices according to the present invention, in particular in order to deploy and utilize the aforementioned security countermeasure, can be used in a trusted environment and in an untrusted environment. An environment may be considered trusted when it is reasonable to assume that an attacker cannot maliciously manipulate or observe the behavior of the device. By contrast, when this assumption is not valid, such as when the device is not in physical possession, the environment may be considered untrusted.

For example, in a trusted environment, to obfuscate the bits significance of each chunk of neural network architecture weights that are deployed on the same PE crossbar, the index of each column may be randomly shuffled. As the process is monitored, the final configuration can be mapped, and the new combination of shift operations that needs to be applied to each crossbar column MAC result may be stored in the form of vectors of integers. This sequence constitutes the secret key required by the authorized user to calculate a coherent output prediction. The PUF design may be programmed following the specifications as described above. Different CRPs may then be selected and registered to calibrate the decoder.

For example, in an untrusted environment, each time the in-memory computation circuit is in its initial state, selected challenges may be applied to the PUF array and may be concatenated with the response bits to generate the secret key.

Subsequently, the secret key may be processed by the decoder, which outputs the correct combination of shifting operations and transmits the value to the corresponding shifting register. The subsequent stages of the execution may proceed identically to those of the unprotected design. In particular, activation inputs to be processed for the NN inference may be transmitted to each obfuscated PE, which performs the MAC computation. Subsequently, each register performs a shifting operation corresponding to the sequence of the values initially transmitted by the decoder. The correct output may then be accumulated and propagated to the remaining digital logic for further processing.

The IMC according to the present invention was tested to sustain attacks. The assumptions regarding the nature of the attack model were made with the intention of covering as many of the attacks described in the previous sections as possible. More specifically, the IMC according to the present invention was tested to protect the confidentiality of the neural network (NN) algorithm against a white box case scenario. It can be assumed that the attacker has the following resources and capabilities: The knowledge of the values of the cells with their corresponding location of the IMC crossbars of the design. These values correspond to the parameters of the (pre-)trained NN that perform the inference computation. The physical possession of the device, to which he can apply any input query and from which he can observe the final output. The knowledge of the entire hardware architecture of the chip. In contrast, the attacker doesn't have access to the responses of our PUF architecture that constitute the secret key. This assumption can be made based on previous studies on such FeFET-based PUF designs, which have demonstrated the robustness of their inherent properties, including randomness, uniqueness, repeatability, and reconfigurability, e.g. as shown in X. Guo et al., "Exploiting FeFET Switching Stochasticity for Low-Power Reconfigurable Physical Unclonable Function," in ESSCIRC 2021 - IEEE 47th European Solid State Circuits Conference (ESSCIRC), Grenoble, France: IEEE, Sep. 2021, pp. 119-122, and their security against different machine learning modeling attacks, e.g. as described in H. Shao et al., "IMCE: An In-Memory Computing and Encrypting Hardware Architecture for Robust Edge Security." The same does not apply to the challenges that instead can be considered disclosed. Exemplary results of tested attacks are shown in detail in the Figures below.

The present invention proposes a novel lightweight security countermeasure based on an obfuscation method for IMC based embedded AI accelerators. The proposed method and devices allow for a low over overhead FeFET-based PUF design that generates reliable CRPs to be used as secret keys. These pairs can be utilized to decode the appropriate sequence of shifting operations necessary for de-obfuscating the bit significance of the deployed NN at runtime. Experimental results showed that the proposed implementation is robust against all the tested attack strategies with less than 3% of area overhead.

The proposed obfuscation mechanism may not require decryption prior to each MAC computation. The proposed obfuscation mechanism is suited for the IMC use case, as it avoids multiple rewrites of values on the crossbar, which could potentially harm the endurance of non-volatile cells. Compared to decryption schemes such as "XOR-CIM: Compute-In-Memory SRAM Architecture with Embedded XOR Encryption", Huang et al., the proposed implementation requires less overhead in terms of area and power consumption. This can be achieved by exploiting shifters. These shifters may be components already used in multiple unprotected architectures. Additionally, the decoder implemented in this context may require less logic since the range of possible values to be rerouted to the shifting inputs is much lower than in A Low Cost Weight Obfuscation Scheme for Security Enhancement of ReRAM Based Neural Network Accelerators", Wang et al. and "Security Enhancement for RRAM Computing System through Obfuscating Crossbar Row Connections", Zou et al.. With respect to "WESCO: Weight-encoded Reliability and Security Co-design for In-memory Computing Systems", Zhang et al., the proposed implementation is more flexible since it doesn't introduce any architectural constraints or latency overheads due to the computation of the corresponding neuron having the same type of encoding. In comparison to "Leveraging Ferroelectric Stochasticity and In-Memory Computing for DNN IP Obfuscation", Mankali et al., the present invention extends the protection from adversarial attacks to hardware attacks, such as side-channels or probing attacks, in order to maintain the IP of the running NN architecture undisclosed. If the attacker were to obtain information on the programmed value of the cells or the results of the MAC computation, they would be unable to compute the correct amount of shift operations to obtain a consistent value.

It shall be understood that a preferred embodiment of the invention can also be any combination of the dependent claims or above embodiments with the respective independent claim.

Brief description of the drawings

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:

| | |
|---|---|
| Figures 1a) to 1d) | show (a) a structure of a 22nm FDSOI-based FeFET, (b) polarization switching dynamics, (c) $I_{DS}$ - $V_{GS}$ characteristics and (d) $V_{TH}$ variability in FeFET device; |
| Figure 2 | shows an embodiment of an in-memory computation circuit and an enrollment process for a FeFET-based PUF array; |
| Figure 3 | shows an embodiment of a FeFET-based PUF array utilized for CRP generation; |
| Figure 4 | shows an architectural implementation of an obfuscated n-PEs cluster; |
| Figures 5, 6a) and 6b) | show exemplary mapping approaches of the parameters to the IMC crossbar; |
| Figure 7 | shows simulated $I_{diff}$ obtained by Monte Carlo simulations; |
| Figures 8a) to d) | show accuracy results of test of attacks for Resnet20, Resnet32, Neural in Network (NiN) and Lenet5 architectures; and |
| Figures 9a) to d) | show time required with respect to different key lengths for Resnet20, Resnet32, Neural in Network (NiN) and Lenet5 architectures. |

Detailed description

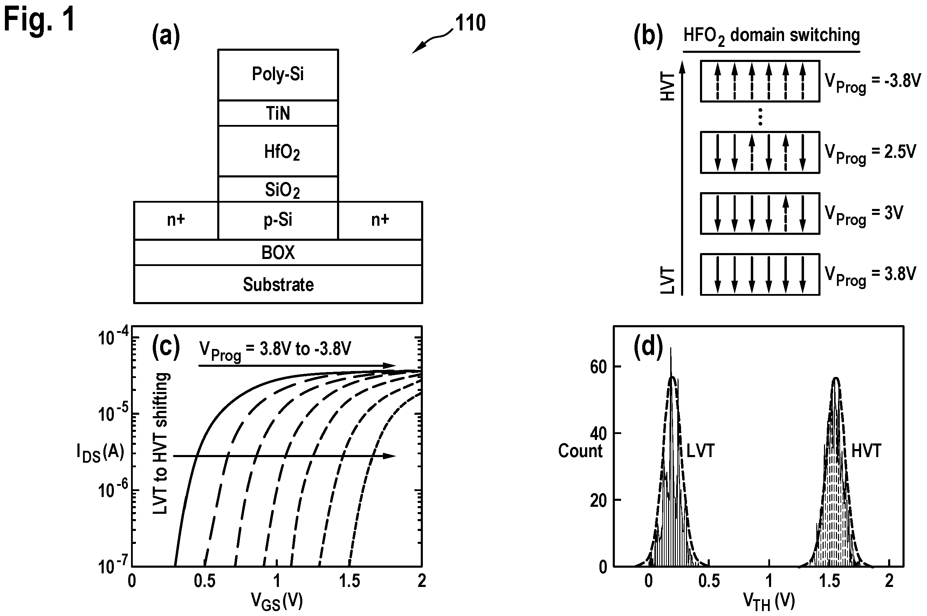

Figure 1a) shows an exemplary ferroelectric field effect transistor (FeFET) 110 suitable for use as a memory cell 112 of a physical unclonable function array 114, also denoted as an IMC crossbar. In particular, Figure 1a) shows a structure of a 22nm FDSOI-based FeFET. FeFETs 110 may be fabricated by depositing a ferroelectric material, such as hafnium oxide ($HfO_2$), as the ferroelectric layer (FE layer) atop the gate insulator, typically silicon dioxide ($SiO_2$), in conventional metal-oxide-semiconductor field-effect transistors (MOSFETs). The ferroelectric materials' non-centrosymmetric structure results in spontaneous polarization within their unit cells, creating a net dipole moment that can be re-oriented by an external electric field. This reorientable dipole moment in the FE layer enables modulation of the threshold voltage ($V_{TH}$) of the underlying transistor. The FeFET 110 exhibits two stable polarization states, low $V_{TH}$ (LVT) and high $V_{TH}$ (HVT), depending on the magnitude and polarity of the programming pulses applied to the gate terminal. These two polarization states are retained even after the gate pulse is withdrawn, enabling their use as non-volatile memory devices. This retention allows FeFETs to store information in the form of polarization states, determined by the applied write or programming pulse. The FE layer comprises multiple domains, each contributing to the overall polarization. The switching behavior of these domains is influenced by the magnitude of the programming pulse. As the magnitude of the applied programming voltage increases, a greater number of domains align their polarization with the field direction, see Fig. 1(b). Figure 1(b) shows polarization switching dynamics. This multi-domain switching mechanism can create intermediate $V_{TH}$ states between the low threshold voltage (LVT) and high threshold voltage (HVT) states, depending on the intensity of the applied programming voltage, see Fig. 1(c). Figure 1(c) shows the $I_{DS}$ - $V_{GS}$ characteristics of a 500nm × 500nm n-type FeFET reveal varying $V_{TH}$ states upon programming with pulses of different magnitudes. This behavior arises from the field-dependent partial polarization of ferroelectric domains within the device. FeFETs 110 exhibit significant device-to-device variability, contributing to a notable standard deviation in their $V_{TH}$ distribution, as illustrated in Fig. 1(d). Figure 1(d) shows $V_{TH}$ variability in FeFET device obtained from Monte Carlo SPICE simulation of 1000 samples.

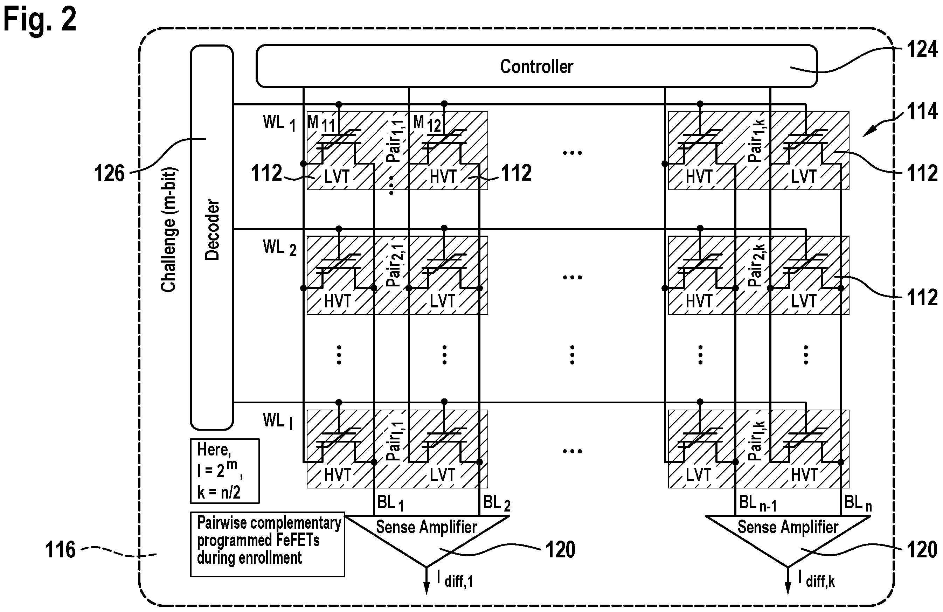

Figure 2 shows an embodiment of an in-memory computation circuit 116 and an enrollment process for the FeFET-based PUF array 114. The in-memory computation circuit 116 may be an element of a pipeline 118 of a plurality of in-memory computation circuits 112. The physical unclonable function array 114 comprises a matrix of memory cells 112 having a plurality of rows and columns. Memory cells 112 within the same column are connected through a common bit line and memory cells 112 within the same row are connected through a common word line. The memory cells 112 are configured for storing weights of a trained, e.g. convolutional, neural network architecture. The order of the columns is pre-scrambled. Each memory cell 112 may comprise a ferroelectric field effect transistor (FeFET) 110. The physical unclonable function array 114 further comprises a plurality of current sense amplifiers 120. The current sense amplifiers 120 are connected to a respective ferroelectric field effect transistor 110 of a final row and are configured for measuring a response of the matrix of memory cells 112.

For example, the enrollment scheme shown in Figure 2 may be performed as follows. The FeFET-based PUF array 114, depicted in Fig. 2, may utilize an enrollment phase to assign specific $V_{TH}$ states to each FeFET using differential IDS sensing and re-programming techniques. The process begins with applying an intermediate write pulse that partially switches the polarization of all FeFETs 110, creating slight variations in $V_{TH}$ and $I_{DS}$ due to inherent stochastic switching. A differential amplifier 120 is used to measure the IDS differences between paired FeFETs (e.g., $M_{11}$ and $M_{12}$ in Fig. 2). For example, if $I_{DS,1} > I_{DS,2}$, FeFET $M_{11}$ is re-programmed to a strong low threshold voltage (LVT) state, and $M_{12}$ is re-programmed to a strong high threshold voltage (HVT) state, and vice versa if $I_{DS,1} < I_{DS,2}$. This process is repeated across all FeFET 110 pairs in the array, resulting in a unique $V_{TH}$ map for each enrollment phase. The highly re-configurable nature of this scheme allows for a completely new VTH distribution to be generated in each subsequent enrollment phase, characterized by its cycle-to-cycle randomness.

Figure 2 further shows a challenge input 122 configured for applying at least one challenge to the physical unclonable function (PUF) array 114. Moreover, a control unit 124 is depicted.

An embodiment of CRP generation is shown in Figure 3. After the enrollment phase, the system is ready for CRP generation. Due to substantial device-to-device variation, FeFETs 110 demonstrate unique IDS values even when programmed to the same state during the enrollment phase. To generate distinct CRPs, we have calculated the differential currents between bit-lines (BLs) within the crossbar array across all possible combinations. This was achieved using sense amplifiers, with each sense amplifier evaluating the difference in current as $I_{diff,xy} = I_{DS,x} - I_{DS,y}$. Here, $I_{DS,x}$ and $I_{DS,y}$ denote the cumulative currents flowing through the array's respective bit-lines BLx and BLy. In the case of an 8×8 crossbar array, this results in a total of 28 distinct current difference combinations across the 8 BLs. For clarity, the current difference specific to BL1 are illustrated in Fig. 3, which employs 7 sense amplifiers. The intrinsic variability of the FeFETs ensures that this configuration produces unique $I_{diff,xy}$ responses for every possible challenge input, thereby facilitating the generation of robust and distinctive CRPs.

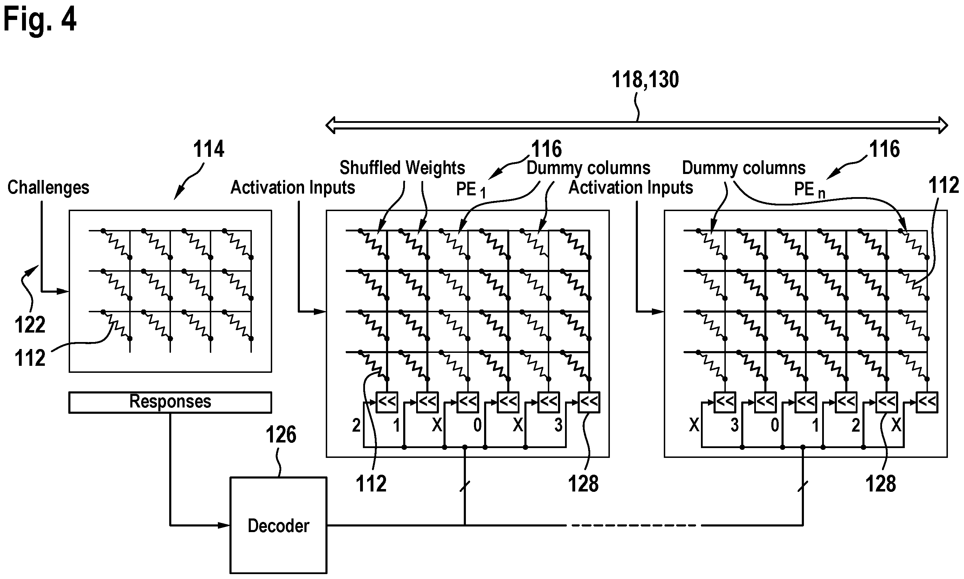

After having obtained the response from the PUF array 114, it is possible to generate a key by concatenating the bits of the CRPs. This vector of bits is then forwarded to a decoder 126. The decoder 126 is configured for outputting a number of shifting operations to be performed by each shifting register of a plurality of shifting registers 128 (e.g. shown in Figure 4) using a secret key. The secret key comprises the response or is another secret key.

Figure 4 shows an architectural implementation of an obfuscated n-PEs cluster of an in-memory computation based artificial intelligence accelerator 130. The decoder 126 receives as input the key and outputs a combination corresponding to the number of shifting operations to be performed by each register. When the key is composed of an expected CRPs the decoder 126 outputs the correct combination necessary to compute a coherent inference. The internal structure of the decoder 126 can be of different kinds.

As further shown in Figure 4, the physical unclonable function array 114 may comprise a plurality of dummy columns unused for storing weights of the trained convolutional neural network architecture. The dummy columns may be scrambled in addition to the columns used for storing weights of the trained convolutional neural network architecture. As the parameters of equation (4) are highly dependent on the use case of the device, the number of possible combinations could be not high enough to guarantee a satisfying degree of protection. For this reason, it is proposed to activate additional "dummy columns" in each PE during the runtime inference computation to increase the number of combinations to be guessed. These redundant columns can map either random values or the unused weights from other layers to avoid the introduction of further area overhead. At the end of each cycle the secret key propagates to the shift register mapping the computed "dummy" MAC values a number of shifting operations higher or equal to the quantization utilized for each result. This can lead to an overflow in the register that zeroes the values adding no contribution to the computed inference. In this case, the number of combinations to be guessed can be calculated using the following formula:

$$\left(\frac{(n_{quant}+n_{dummy})!}{n_{dummy}!}\right)^{N_{PEs}} \qquad (5)$$

wherein $n_{dummy}$ is the number of "dummy columns" introduced.

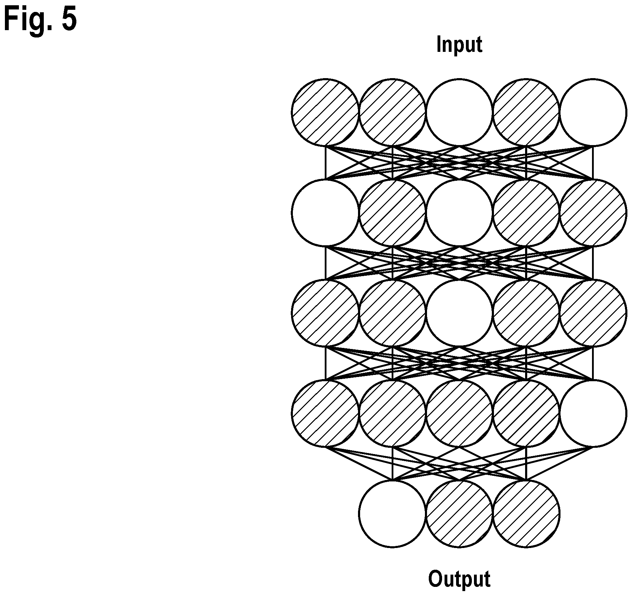

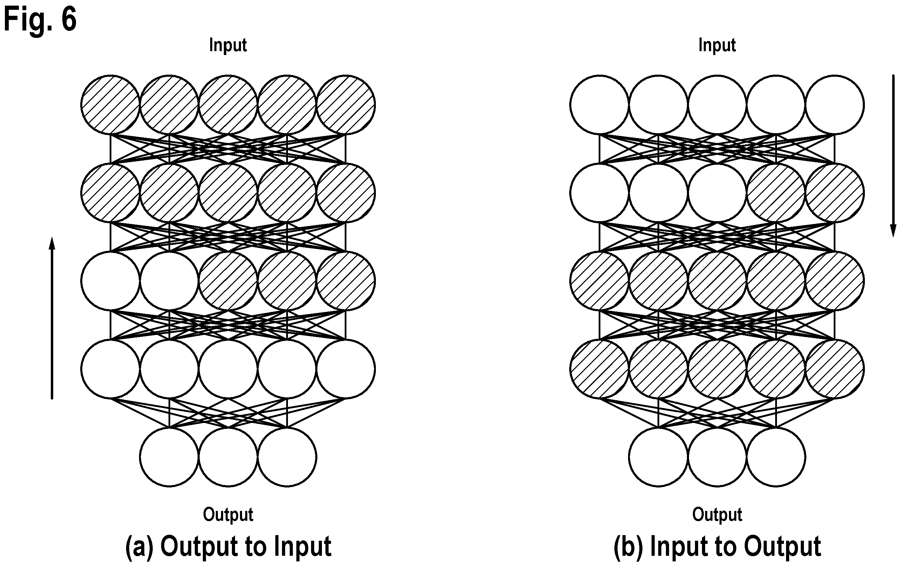

Figures 5, 6a) and 6b) show exemplary mapping approaches of the parameters to the IMC crossbar 114. The objective is to implement the security countermeasure in a manner that would dissuade any potential attacker from attempting a brute-force attack with the intention of reverse engineering the NN architecture. Assuming the attackers can identify and extract the raw data from each PE, the first naive attempt from their side could consist of directly guessing the custom shifting operations that each register performs. This strategy, however, is highly inefficient considering the huge number of possible scenarios that can be calculated using equations 4 and 5. For instance, in the context of an IMC

Device, e.g. as described in T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1-25, Nov. 202,. with $n_{quant}$ = 4 and $N_{PEs}$ = 4 · 8 = 32, the number of combinations required to disclose just one cluster would be $(4!)^{32} > 10^{44}$. In case four dummy columns were activated for each PE this number would rise even more to $[(4 + 4)!/(4!)]^{32} > 10^{103}$. However, as the overhead would otherwise be excessively large, it is assumed that each CRP generated by the PUF design decodes multiple shifting operations simultaneously. This consequently presents an alternative, more efficient strategy for the attacker, who could target the response bits of the PUF before they are forwarded to the decoder 126. By propagating each value through the decoder's 126 logic, he could obtain the corresponding combination of shifting operations, thereby gradually disclosing parts of the obfuscated NN architecture with fewer guesses. To evaluate the effectiveness of this gradual disclosure in terms of inference accuracy, it is necessary to consider the actual mapping of the parameters to the IMC crossbar. However, given the huge number of potential scenarios that are dependent on the specific choice of the hardware designer, in Figures 5 and 6 two mapping-agnostic approaches are presented that an attacker could follow for its brute-force strategy.

Figure 5 shows an architectural approach. Light circles represent the disclosed neurons while the hatched circles represent the undisclosed ones. The first approach consists of a naive strategy that targets the register that stores the bits of the responses generated from the PUF. In this case, the attacker randomly tries to guess each bit sequentially and, after running a full inference with the test batch for each combination, he observes the predicted output to detect a meaningful variation in the accuracy. As he gradually guesses the correct parts of the key, he also discloses multiple neurons of the NN architecture. However, the distribution of these neurons is not necessarily consistent, but rather randomly dispersed throughout all layers of the network, as shown in Fig. 5.

Figures 6a) and b) show an Algorithmic Approach. The light circles represent the disclosed neurons while the hatched circles represent the undisclosed ones. In Figures 6a) an output to in put and in Figure 6b) an input to output approach is shown. The Algorithmic Approach is more fine-tuned to the algorithmic structure of the NN architecture. In this case, it is assumed that an attacker can identify the layers' location of the parameters mapped in different crossbars' columns (e.g. by analyzing the side-channel information of the chip Z. Wang et al., "Side-Channel Attack Analysis on In-Memory Computing Architectures," IEEE Transactions on Emerging Topics in Computing, pp. 1-13, 2023). In this case, an examination of the hardware architecture allows the attacker to discern the exact sections of the secret key that are relevant to the regions of the chip that are of interest. Based on this assumption, two potential strategies for an attacker are derived, as shown in Fig. 6a and 6b. Firstly, the attacker targets the output layer of the NN architecture, as this is where the most meaningful parts of the inference are computed. Once this has been successfully disclosed, he can proceed either from the output to the input layer or from the input to the output layer. Similar to the architectural approach, he runs a full test batch to detect at which guessed combination of bits the algorithm outputs meaningful predictions.

As the length of the key is proportional to the overhead introduced by the PUF logic, our goal is to investigate the design space exploration resulting from the trade-off between the degree of security and redundant logic introduced by our implementation. To evaluate that, the inference phase of each NN is run using a full test batch and observed the obtained accuracy. Multiple scenarios were simulated in which gradually increased the percentages of disclosed architecture is increased and the point after which the accuracy overcomes a certain threshold is extracted. This threshold was identified as the level at which the observed output becomes distinguishable from the random noise that would otherwise be obtained when the design is fully obfuscated. This would indicate to the attacker that a significant portion of the secret key has been guessed correctly and that could represent for him a trigger point to start fine-tuning his disclosing strategy. Once the amount of undisclosed weights required to obtain the selected threshold accuracy is identified, it can be assumed that it reflects the percentage of key bits to be correctly guessed in the same way. Equation 6 below can be used to calculate the time necessary for him to achieve the selected threshold accuracy:

$$\text{Time}_{thr} = \text{Time}_{inf} * 2^{\text{Keybits}*\text{Percentagethr}} \tag{6}$$

wherein $\text{Time}_{inf}$ and $\text{Time}_{thr}$ are respectively the time required to compute a full test batch inference and to reach the pre-defined accuracy threshold, Keybits is the total number of secret bits to be guessed, and Percentagethr is the degree of de-obfuscation required. To find the minimum number of columns required to generate Keybits secret bits and calculate the corresponding overhead, equations 7 and 8 can be solved:

$$\frac{1}{2} * (N_{columns} - 1) * N_{columns} = \frac{Keybits}{Nchall} \tag{7}$$

$$Overhead_{PUF} = Area_{col} * N_{columns} + Area_{per} \tag{8}$$

wherein $N_{columns}$ is the number of columns of the PUF design, Nchall is the number of selected challenges, $Area_{col}$ is the area required to implement each column, $Area_{per}$ is the area of the peripheral circuitry associated to the PUF, including the sense amplifiers and the decoder, and $Overhead_{PUF}$ is the total area of the PUF.

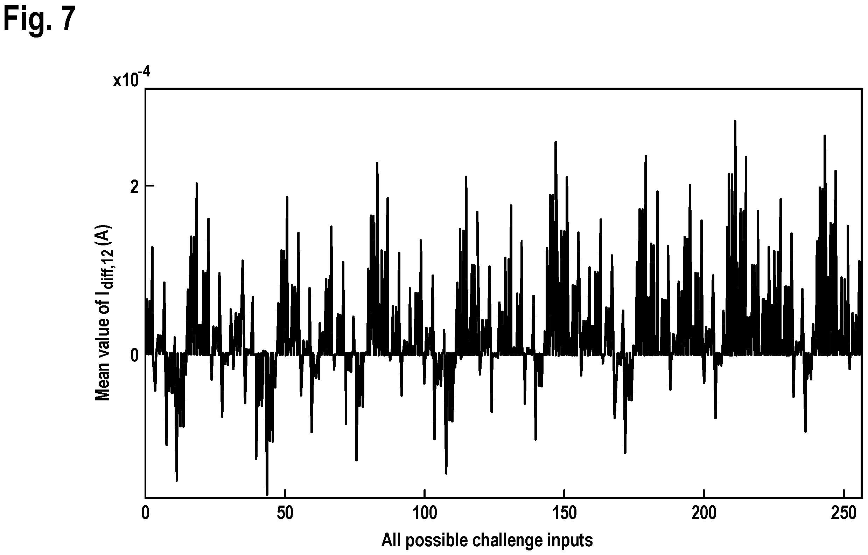

The experimental setup was as follows. The FeFET-based PUF was realized using GlobalFoundries 22nm technology. An 8×8 FeFET crossbar array (see Fig.3) was simulated in SPICE, utilizing the GlobalFoundries 22nm process development kit alongside a compact model for the ferroelectric capacitor. During the enrollment phase, a random programming pulse was applied across all WLs in the array, leading to the FeFETs being randomly programmed to intermediate states due to the stochastic switching behavior of ferroelectric domains. The differential current ($I_{diff}$) between adjacent bit-BLs was sensed, and based on its magnitude, the corresponding FeFETs were reprogrammed to strong HVT or LVT states according to the enrollment scheme described above. After enrollment, challenge inputs were applied to the WLs, with sense amplifiers connected to the BLs detecting the current differences across 28 possible combinations for the 8 BLs. Monte Carlo simulations were conducted for 1000 samples to assess variations in $I_{diff}$, considering a threshold voltage variation with a standard deviation of 57mV. The inherent variability of the FeFETs ensures that all 256 possible challenge input combinations for the 8×8 crossbar array produce unique responses ($I_{diff}$). For simplicity, only the mean value of $I_{diff,12}$ is shown obtained from the Monte Carlo simulation in Fig. 7. This clearly shows that for all possible 256 challenge input combinations, the PUF generates unique $I_{diff,12}$.

The behavior of the PUF crossbar was included in multiple simulations using ProxSim (C. De la Parra et al., "ProxSim: GPU-based simulation framework for cross-layer approximate DNN optimization," in 2020 Design, Automation & Test in Europe Conference & Exhibition (DATE). IEEE, 2020, pp. 1193-1198), a GPU-based framework for hardware-aware retraining and evaluation of DNNs. The framework was modified to include our de-obfuscation scheme during the runtime inference phase of the algorithm. When the expected responses are returned, a Look-up-table outputs the correct sequence of shift operations to be applied to the values computed from each PE. The inference phase of multiple NN architectures was ran using the attack strategies described above with different percentages of disclosed secret key for each scenario. More specifically the Resnet20 (see K. He et al., "Deep Residual Learning for Image Recognition," 2015, eprint: 1512.03385), Resnet32 (see K. He et al., "Deep Residual Learning for Image Recognition," 2015, eprint: 1512.03385), Neural in Network (NiN) (see M. Lin et al., "Network In Network," 2014, eprint: 1312.4400) and Lenet5 (see Y. Lecun et al., "Gradient-based learning applied to document recognition," Proc. IEEE, vol. 86, no. 11, pp. 2278-2324, Nov. 1998) architectures trained with the CIFAR10 (see A. Krizhevsky, "Convolutional Deep Belief Networks on CIFAR-10.") and MNIST (see L. Deng, "The mnist database of handwritten digit images for machine learning research," IEEE Signal Processing Magazine, vol. 29, no. 6, pp. 141-142, 2012, publisher: IEEE) datasets were tested.

To demonstrate the robustness of our security countermeasure also for highly compressed NNs, a quantization of 4-bit integers for the weights and 8-bit integers for the activation inputs was utilized. For each simulation, the accuracy obtained for different percentages of architecture disclosed was saved and the time required for one full inference on Proxsim was collected. This time was used as a reference, as it represents the worst-case scenario, in which the attacker has access to a GPU (that can reach around 10 times the throughput of state-of-the-art IMC chips, e.g. as described in T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1- 25, Nov. 2022, or Y. Long et al., "A Ferroelectric FET-Based Processing-in-Memory Architecture for DNN Acceleration," IEEE J. Explor. Solid-State Comput. Devices Circuits, vol. 5, no. 2, pp. 113-122, Dec. 2019,) and a similar simulation framework optimized for the execution of low-latency inference computations.

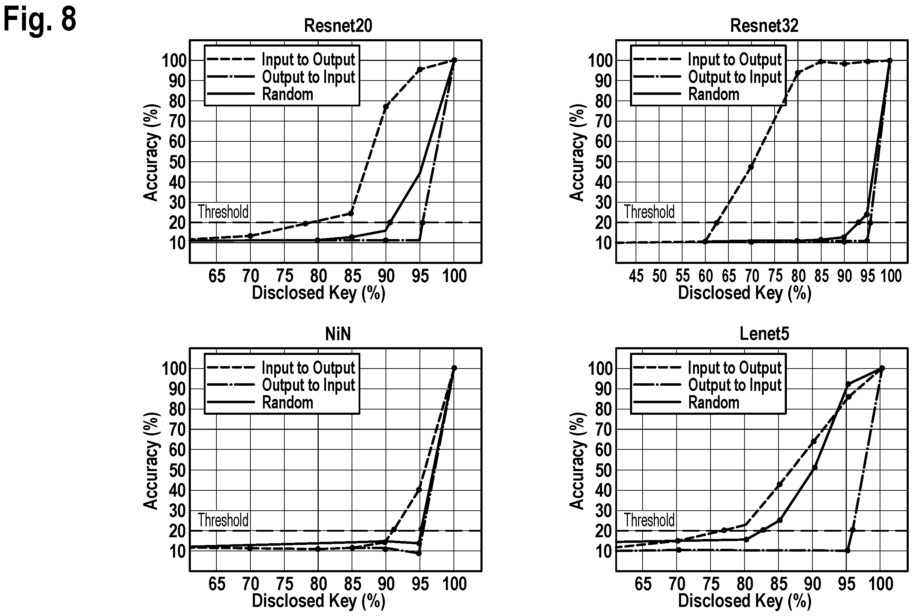

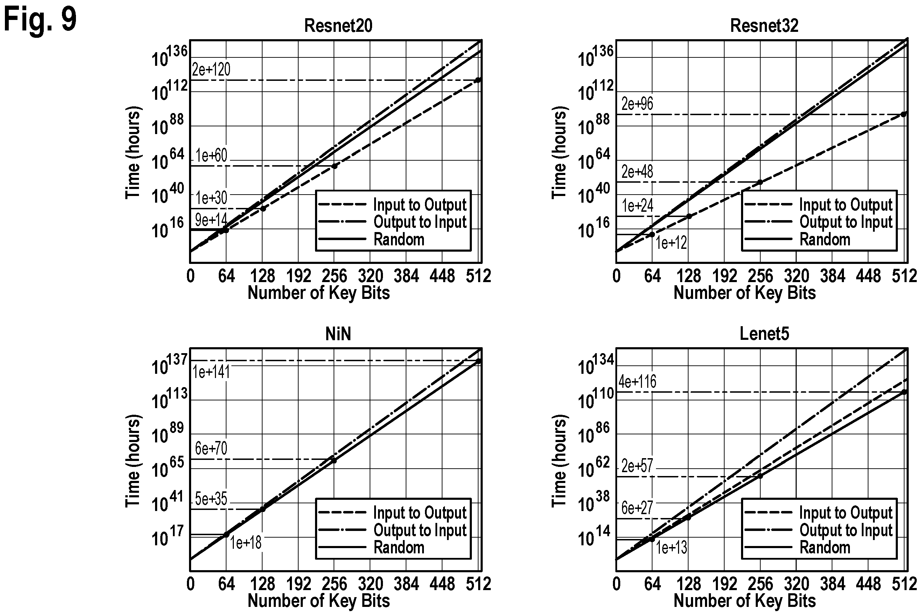

Fig. 8 and 9 present the results in terms of accuracy and time obtained for different scenarios. By observing the accuracy graphs for different simulations we empirically identified in 20% the point after which all the accuracy curves begin to increase rapidly and differentiate itself from noise. For this reason, this accuracy percentage was set as the threshold level that an attacker aims to reach as it provides an indication of a partially successful brute-force attack. The results proved that a targeted strategy starting from the output layer and gradually disclosing the rest of NN is highly inefficient for all algorithms. This however doesn't apply to the other two strategies that show different benefits according to the type of architecture. With Resnet architectures, an attacker can reach more rapidly a higher accuracy by gradually disclosing the layers from input to output. For instance, in the case of Resnet32, 75% of disclosed architecture is sufficient to retrieve more than 70% of the original accuracy. On the contrary for architectures like NiN and Lenet5, it is slightly more convenient to gradually disclose random parts of the algorithm. With this technique, for instance, with 87% of key disclosed Lenet5 reaches more than 50% of the original accuracy. Once the most optimal brute forcing strategy had been identified for each architecture, equation 6 was used to plot on a logarithmic scale the time necessary to reach the threshold accuracy for different bit lengths, as shown in Fig. 9. The results show that even for lightweight architectures like Lenet5, the time required for an attacker would be more than 1 billion years to test the accuracy with enough combinations of a 64 bits secret key. The same is valid for also the other architectures using different strategies. For Resnet32, for instance, using a secret key having the same amount of bits, the time required to test all combinations to reach the threshold accuracy would be > 100 million years.

A defense mechanism may be as follows. As described above, there are other possible attacks on IMC accelerators that pose a threat to the information protection of the running algorithm. By merely examining the output of the computed prediction, an attacker could potentially extract valuable information regarding the NN architecture, circumventing the necessity for side-channel or probing attacks on the crossbar circuitry and the subsequent brute forcing. This could be done by carefully crafting adversarial queries (such as describes in M. Juuti et al., "PRADA: Protecting against DNN Model Stealing Attacks," Mar. 2019, arXiv:1805.02628 and B. Wu et al., "Model Extraction Attacks on Graph Neural Networks: Taxonomy and Realization," Nov. 2021, arXiv:2010.12751) or injecting faults in the logic (such as described in F. Staudigl et al., "NeuroHammer: inducing bit-flips in memristive crossbar memories," in 2022 Design, Automation & Test in Europe Conference & Exhibition (DATE). IEEE, 2022, pp. 1181-1184). If such attacks are detected using tools such as FACER (e.g. as described in C. Schorn et al., "FACER: A Universal Framework for Detecting Anomalous Operation of Deep Neural Networks," in 2020 IEEE 23rd International Conference on Intelligent Transportation Systems (ITSC). Rhodes, Greece: IEEE, Sep. 2020, pp. 1-6), it is possible to exploit this security countermeasure also as a defense mechanism similar to those described in L. Mankali et al., "Leveraging Ferroelectric Stochasticity and In-Memory Computing for DNN IP Obfuscation," IEEE J. Explor. Solid-State Comput. Devices Circuits, vol. 8, no. 2, pp. 102-110, Dec. 2022. This can be achieved by raising a flag in the decoder, which consequently outputs random shifting operations and transmits them to all PE registers. Consequently, the computation performed by the IMC accelerator would output noise, which would be rendered useless for a potential model-stealing attack.

With respect to overhead, table I presents a comparative analysis of the overhead introduced by our security countermeasure applied to two architectures T. Soliman et al., "FELIX: A Ferroelectric FET Based Low Power Mixed-Signal In-Memory Architecture for DNN Acceleration," ACM Transactions on Embedded Computing Systems, vol. 21, no. 6, pp. 1- 25, Nov. 2022 and Y. Long et al., "A Ferroelectric FET-Based Processing-in-Memory Architecture for DNN Acceleration," IEEE J. Explor. Solid-State Comput. Devices Circuits, vol. 5, no. 2, pp. 113-122, Dec. 2019 and the state-of-the-art.

Table I:

| Proposed Implementation **FeFET** | Length Secret Keys | | | | H. Shao et al. | M. Zou et al. | Y. Wang et al. | S. Huang et al. |
|---|---|---|---|---|---|---|---|---|
| Secret Key (Bits) | **64** | **128** | **256** | **512** | **FeFET** | **RRAM** | **RRAM** | **RRAM** |

(continued)

| Proposed Implementation **FeFET** | Length Secret Keys | | | | H. Shao et al. | M. Zou et al. | Y. Wang et al. | S. Huang et al. |
|---|---|---|---|---|---|---|---|---|
| Overhead (% Area [T. Soliman et al.]) | 0,567 | 0,568 | 1,135 | 2,268 | > 90 | 0,092-230 | 0,004-9,92 | 122 |
| Overhead (% Area [Y. Long et al.]) | 0,056 | 0,056 | 0,112 | 0,224 | | | | |

To calculate the area introduced by the PUF, we selected a subset of the most stable and diverse combinations of CRPs from Fig.7 and solved equations 7 and 8. As a reference for the decoder, the area introduced by the necessary number of 128-bit AES encryption components was used, e.g. as described in H. Kaeslin, Top-Down Digital VLSI Design: From Architectures to Gate- Level Circuits and FPGAs, 1sted. San Francisco, CA, USA: Morgan Kaufmann Publishers Inc., 2014, synthesized at 22nm. Results show that even by only selecting 2% of all potential CRPs it is possible to generate a 512-bit secret key with less than 3% area overhead of both chips. As a point of comparison, the values for the other state-of-the art solutions have been reported and adjusted to reflect the setup according to the present invention, in which the full NN architecture is obfuscated and a single binary state is represented by each 1T1R cell. In contrast to Y. Wang et al., "A Low Cost Weight Obfuscation Scheme for Security Enhancement of ReRAM Based Neural Network Accelerators." ACM, Jan. 2021, pp. 499-504 and M. Zou et al., "Security enhancement for rram computing system through obfuscating crossbar row connections," in 2020 Design, Automation & Test in Europe Conference & Exhibition (DATE). IEEE, 2020, pp. 466-471, the overhead introduced by our solution is independent of the specific type of NN architecture, but only proportional to the bit lengths of the key. Additionally, in contrast to the XOR encryption (e.g. as described in M. Zou et al., "Security enhancement for rram computing system through obfuscating crossbar row connections," in 2020 Design, Automation & Test in Europe Conference & Exhibition (DATE). IEEE, 2020, pp. 466-471), which would require a crossbar array twice as large for 1T1R FeFET cells to store the same number of parameters, the proposed implementation introduces an overhead that remains consistent regardless of the cell structure or technology employed. In comparison to the other solutions, our proposed design offers a more comprehensive range of protection against diverse attack types while always maintaining comparable, if not reduced, area overhead.

**Claims**

1. An in-memory computation (IMC) circuit (116) comprising

   - an array comprising a matrix of memory cells (112) having a plurality of rows and columns, wherein memory cells (112) within the same column are connected through a common bit line and memory cells within the same row are connected through a common word line, wherein the memory cells (112) are configured for storing weights of a trained neural network architecture, wherein the order of the weights is pre-scrambled;
   - at least one decoder (126) configured for outputting a number of shifting operations to be performed by each shifting register of a plurality of shifting registers (128) using a secret key;
   - the plurality of shifting registers (128) configured for shifting outputs of the array according to the output of the decoder (126).

2. The in-memory computation circuit (116) according to the preceding claim, wherein the array (114) comprises a plurality of columns which are used as dummy columns unused for storing weights of the trained neural network architecture, wherein the dummy columns are scrambled in addition to the columns used for storing weights of the trained neural network architecture.

3. The in-memory computation circuit (116) according to any one of the preceding claims, wherein the trained neural network is a convolutional neural network.

4. The in-memory computation circuit (116) according to any one of the preceding claims, wherein the secret key is a secret key stored in a secure part of the in-memory computation circuit (116).

5. The in-memory computation circuit (116) according to any one of the preceding claims, wherein the in-memory computation (IMC) circuit (116) further comprises

- a challenge input (122) configured for applying at least one challenge to a physical unclonable function (PUF) array (114),

wherein the array comprises the physical unclonable function array (114), wherein the physical unclonable function array is configured for generating an output,
wherein the decoder (126) is configured for outputting a number of shifting operations to be performed by each shifting register of a plurality of shifting registers (128) using the secret key, wherein the secret key comprises the challenge and the output of the physical unclonable function array.

6. The in-memory computation circuit (116) according to the preceding claim, wherein each memory cell (112) comprises a ferroelectric field effect transistor (FeFET) (110), wherein the physical unclonable function array (114) further comprises a plurality of current sense amplifiers (120), wherein the current sense amplifiers (120) are connected to a respective ferroelectric field effect transistor (110) of a final row and are configured for measuring a response of the matrix of memory cells (112), wherein each of the current sense amplifiers (120) is configured for measuring a current difference between two columns, respectively.

7. The in-memory computation circuit (116) according to any one of the two preceding claims, wherein the in-memory computation circuit (116) comprises at least one analog to digital converter (ADC) configured for converting an output of the current sense amplifiers (120) into a digital form.

8. The in-memory computation circuit (116) according to any one of the three preceding claims, wherein, the physical unclonable function array (114) is configured for receiving at least one selected challenge as input and the secret key is generated by using the response of the matrix, wherein the decoder (126) is configured for outputting the number of shifting operations to be performed by each shifting register (126) using the secret key.

9. The in-memory computation circuit (116) according to the preceding claim, wherein, in subsequent stages of using the in-memory computation circuit, the matrix of memory cells is configured for receiving activation inputs to be processed for a neural network architecture inference and performing multiply and accumulate computation, wherein each shifting register (128) is configured for performing a shifting operation corresponding to the secret key.

10. The in-memory computation circuit (116) according to any one of the preceding claims, wherein the in-memory computation circuit (116) comprises at least one framework configured for detecting anomalies in the trained neural network architecture.

11. An in-memory computation based artificial intelligence accelerator (130) comprising a pipeline (118) of a plurality of in-memory computation circuits (116) according to any one of the preceding claims.

12. The in-memory computation based artificial intelligence accelerator (130) according to the preceding claim, wherein the artificial intelligence accelerator (130) comprises at least one control unit (124) configured for controlling the pipeline (118) of in-memory computation circuits (116).

13. A method for in-memory computation, wherein an in-memory computation circuit (116) according to any one of the preceding claims referring to an in-memory computation circuit is used, wherein the method comprises the following steps:

i. retrieving a secure key;
ii. outputting by the decoder (126) a number of shifting operations to be performed by each shifting register (128) using the secret key;
iii. transmitting the output of the decoder (126) to the shifting registers.

14. The method according to the preceding claim, wherein step i. comprises retrieving at least one challenge by using the challenge input and applying the challenge to a physical unclonable function array (114) of the in-memory computation circuit (116), wherein the method further comprises measuring an output of the physical unclonable function array (114), wherein step ii. comprises outputting by the decoder (126) a number of shifting operations to be performed by each shifting register (128) using the challenge and the output of the physical unclonable function array as the secret key.

15. The method according to any one of the two preceding claims, wherein the method comprises pre-scrambling the weights of the trained neural network architecture according to a secret key and storing the pre-scrambled weights into the array of the in-memory computation circuit (116).

Fig. 1

(a)                                    110

| Poly-Si |
| TiN |
| HfO₂ |
| SiO₂ |

| n+ | p-Si | n+ |
| BOX |
| Substrate |

(b) HFO₂ domain switching

HVT

$V_{Prog} = -3.8V$

$V_{Prog} = 2.5V$

$V_{Prog} = 3V$

LVT

$V_{Prog} = 3.8V$

(c) $V_{Prog}$ = 3.8V to -3.8V

LVT to HVT shifting

$I_{DS}(A)$

$V_{GS}(V)$

(d)

Count

LVT            HVT

$V_{TH}(V)$

Fig. 2

Fig. 3

# Fig. 4

EP 4 730 199 A1

Input

Fig. 5

Fig. 6

(a) Output to Input

(b) Input to Output

Fig. 7

# Fig. 8

Resnet20

Accuracy (%)

- - - Input to Output
- · - Output to Input
——— Random

Threshold

Disclosed Key (%)

Resnet32

Accuracy (%)

- - - Input to Output
- · - Output to Input
——— Random

Threshold

Disclosed Key (%)

NiN

Accuracy (%)

- - - Input to Output
- · - Output to Input
——— Random

Threshold

Disclosed Key (%)

Lenet5

Accuracy (%)

- - - Input to Output
- · - Output to Input
——— Random

Threshold

Disclosed Key (%)

EP 4 730 199 A1

Fig. 9

| | Europäisches Patentamt European Patent Office Office européen des brevets | **EUROPEAN SEARCH REPORT** | **Application Number** EP 24 20 7686 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 255 811 A (ADLER ROY L) 10 March 1981 (1981-03-10) * figure 1 * * figure 2 * * column 5, line 23 - line 27 * * column 5, line 38 - line 40 * * column 10, line 8 - line 14 * ----- | 1-15 | INV. G06N3/045 G06N3/048 G06N3/063 G11C7/10 G11C7/24 H04L9/08 H04L9/32 |
| A | RAJENDRAN GOKULNATH ET AL: "Securing Binarized Neural Networks via PUF-Based Key Management in Memristive Crossbar Arrays", IEEE EMBEDDED SYSTEMS LETTERS, IEEE, USA, vol. 17, no. 1, 1 July 2024 (2024-07-01), pages 30-33, XP011998579, ISSN: 1943-0663, DOI: 10.1109/LES.2024.3422294 [retrieved on 2024-07-02] * figure 2 * * figure 3 * * Section I. * * Section III.B * ----- | 1-15 | |
| A | SHANSHI HUANG ET AL: "New Security Challenges on Machine Learning Inference Engine: Chip Cloning and Model Reverse Engineering", ARXIV.ORG, CORNELL UNIVERSITY LIBRARY, 201 OLIN LIBRARY CORNELL UNIVERSITY ITHACA, NY 14853, 21 March 2020 (2020-03-21), XP081626909, * figure 1 * * figure 5 * * figure 6 * * Section II. * * Section IV.B * ----- -/-- | 1-15 | **TECHNICAL FIELDS SEARCHED (IPC)** G06N G11C H04L |

The present search report has been drawn up for all claims

| Place of search | Date of completion of the search | Examiner |
|---|---|---|
| Munich | 6 March 2025 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 20 7686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MANKALI LIKHITHA ET AL: "Leveraging Ferroelectric Stochasticity and In-Memory Computing for DNN IP Obfuscation", IEEE JOURNAL ON EXPLORATORY SOLID-STATE COMPUTATIONAL DEVICES AND CIRCUITS, IEEE, vol. 8, no. 2, 25 October 2022 (2022-10-25), pages 102-110, XP011928860, DOI: 10.1109/JXCDC.2022.3217043 [retrieved on 2022-12-02] * figure 6 * * Section I.B. * * Section II. * | 1-15 | |

-----

TECHNICAL FIELDS
SEARCHED      (IPC)

The present search report has been drawn up for all claims

| Place of search | Date of completion of the search | Examiner |
|---|---|---|
| Munich | 6 March 2025 | Caragata, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 24 20 7686

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | Publication date | Patent family member(s) | Publication date |
|---|---|---|---|
| US 4255811 A | 10-03-1981 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. JUUTI et al.** PRADA: Protecting against DNN Model Stealing Attacks. *arXiv:1805.02628*, March 2019
- **B. WU et al.** Adapting Membership Inference Attacks to GNN for Graph Classification: Approaches and Implications. *arXiv:2110.08760*, October 2021
- **B. WU et al.** Model Extraction Attacks on Graph Neural Networks: Taxonomy and Realization. *ar-Xiv:2010.12751*, November 2021
- **N. PAPERNOT et al.** Practical Black-Box Attacks against Machine Learning.. ACM, April 2017, 506-51
- **P. ROBERTS**. *MIT discarded hard drives yield private info*, January 2003
- i-NVMM: a secure non-volatile main memory system with incremental encryption. **S. CHHABRA et al.** Proceedings of the 38th annual international symposium on Computer architecture. ACM, June 2011, 177-188
- NeuroHammer: inducing bit-flips in memristive crossbar memories. **F. STAUDIGL et al.** 2022 Design, Automation & Test in Europe Conference & Exhibition (DATE). IEEE, 2022, 1181-1184
- SNIFF: reverse engineering of neural networks with fault attacks. **J. BREIER et al.** IEEE Transactions on Reliability. 2021
- **Z. WANG et al.** Side-Channel Attack Analysis on In-Memory Computing Architectures. *IEEE Transactions on Emerging Topics in Computing*, 2023, 1-13
- A Method for Reverse Engineering Neural Network Parameters from Compute-in-Memory Accelerators. **J. READ et al.** 2022 IEEE Computer Society Annual Symposium on VLSI (ISVLSI). IEEE, July 2022, 302-307
- **SOLIMAN**. *FELIX: A Ferroelectric FET Based Low Power Mixed-Signal In-Memory Architecture for DNN Acceleration*
- **MANKALI**. Leveraging Ferroelectric Stochasticity and In-Memory Computing for DNN IP Obfuscation
- **SINGH**. Hardware Security Primitives using Passive RRAM Crossbar Array: Novel TRNG and PUF Designs
- **SCHORN**. *FACER: A Universal Framework for Detecting Anomalous Operation of Deep Neural Networks*
- **T. SOLIMAN et al.** FELIX: A Ferroelectric FET Based Low Power Mixed-Signal In-Memory Architecture for DNN Acceleration. *ACM Transactions on Embedded Computing Systems*, November 2022, vol. 21, 1-25
- **F. ROTTENBERG et al.** CSI-Based Versus RSS-Based Secret-Key Generation Under Correlated Eavesdropping. *IEEE Trans. Commun.*, March 2021, vol. 69 (3), 1868-1881
- Exploiting FeFET Switching Stochasticity for Low-Power Reconfigurable Physical Unclonable Function. **X. GUO et al.** ESSCIRC 2021- IEEE 47th European Solid State Circuits Conference (ESSCIRC). IEEE, September 2021, 119-122
- **T. SOLIMAN et al.** FELIX: A Ferroelectric FET Based Low Power Mixed-Signal In-Memory Architecture for DNN Acceleration. *ACM Transactions on Embedded Computing Systems*, November 2022, vol. 21 (6), 1-25
- **T. CHEN et al.** *DianNao: A Small-Footprint High-Throughput Accelerator for Ubiquitous Machine-Learning.*
- **A. SHAFIEE et al.** ISAAC: A Convolutional Neural Network Accelerator with In-Situ Analog Arithmetic in Crossbars. IEEE, June 2016, 14-26
- Analog/Mixed-Signal Hardware Error Modeling for Deep Learning Inference. **A. S. REKHI et al.** Proceedings of the 56th Annual Design Automation Conference 2019. ACM, June 2019, 1-6
- **C. D. I. PARRA et al.** Increasing Throughput of In-Memory DNN Accelerators by Flexible Layerwise DNN Approximation. *IEEE Micro*, November 2022, vol. 42, 17-24
- **Q. DONG et al.** 2020 IEEE International Solid- State Circuits Conference - (ISSCC). IEEE, February 2020, vol. 15.3 A 351 TOPS/W and 372.4GOPS Compute-in- Memory SRAM Macro in 7nm FinFET CMOS for Machine-Learning Applications, 242-244
- **S. SINGH et al.** Hardware Security Primitives using Passive RRAM Crossbar Array: Novel TRNG and PUF Designs. *eprint: 2211.03526*, 2022
- **M. J. DWORKIN**. Advanced Encryption Standard (AES). *National Institute of Standards and Technology (U.S.)*, 01 May 2023
- **KAMBAYASHI**. Logic Design of Programmable Logic Arrays. *IEEE Trans. Comput.*, September 1979 (9), 609-617

- **S. HUANG et al.** New security challenges on machine learning inference engine: Chip cloning and model reverse engineering. *arXiv preprint arXiv:2003.09739*, 2020
- **M. R. PILLMEIER et al.** Design alternatives for barrel shifters. December 2002, 436
- FSPA: An FeFET-based Sparse Matrix-Dense Vector Multiplication Accelerator. **X. ZHANG et al.** 2023 60th ACM/IEEE Design Automation Conference (DAC). IEEE, July 2023, 1-6
- **Y. LONG et al.** A Ferroelectric FET-Based Processing-in-Memory Architecture for DNN Acceleration. *IEEE J. Explor. Solid-State Comput. Devices Circuits*, December 2019, vol. 5 (2), 113-122
- **Y. CAI et al.** Enabling Secure in-Memory Neural Network Computing by Sparse Fast Gradient Encryption.. *ICCAD*, 2019, 1-8
- **S. HUANG et al.** XOR-CIM: compute-in-memory SRAM architecture with embedded XOR encryption. ACM, November 2020, 1-6
- **H. SHAO et al.** IMCE: An In-Memory Computing and Encrypting Hardware Architecture for Robust Edge Security. *Fin Field-Effect Transistor (FinFET)*
- **J. LUO et al.** Novel Ferroelectric Tunnel FinFET based Encryption embedded Computing-in-Memory for Secure AI with High Area-and-Energy-Efficiency.. IEEE, December 2022
- **W. LI et al.** Secure-RRAM: A 40nm 16kb Compute-in-Memory Macro with Reconfigurability, Sparsity Control, and Embedded Security. IEEE, April 2021, 1-2
- **Y. WANG et al.** A Low Cost Weight Obfuscation Scheme for Security Enhancement of ReRAM Based Neural Network Accelerators. ACM, January 2021, 499-504
- Security enhancement for rram computing system through obfuscating crossbar row connections. **M. ZOU et al.** 2020 Design, Automation & Test in Europe Conference & Exhibition (DATE). IEEE, 2020, 466-471
- **J. ZHANG et al.** WESCO: Weight-encoded Reliability and Security Codesign for In-memory Computing Systems.. IEEE, July 2022, 296-301
- **L. MANKALI et al.** Leveraging Ferroelectric Stochasticity and In-Memory Computing for DNN IP Obfuscation. *IEEE J. Explor. Solid-State Comput. Devices Circuits*, December 2022, vol. 8 (2), 102-110
- Exploiting FeFET Switching Stochasticity for Low-Power Reconfigurable Physical Unclonable Function. **X. GUO et al.** ESSCIRC 2021 - IEEE 47th European Solid State Circuits Conference (ESSCIRC). IEEE, September 2021, 119-122
- **H. SHAO et al.** *IMCE: An In-Memory Computing and Encrypting Hardware Architecture for Robust Edge Security.*
- **HUANG**. *XOR-CIM: Compute-In-Memory SRAM Architecture with Embedded XOR Encryption*
- **WANG**. *A Low Cost Weight Obfuscation Scheme for Security Enhancement of ReRAM Based Neural Network Accelerators*
- **ZOU**. *Security Enhancement for RRAM Computing System through Obfuscating Crossbar Row Connections*
- **ZHANG**. *WESCO: Weight-encoded Reliability and Security Co-design for In-memory Computing Systems*
- FELIX: A Ferroelectric FET Based Low Power Mixed-Signal In-Memory Architecture for DNN Acceleration. **T. SOLIMAN et al.** ACM Transactions on Embedded Computing Systems, vol. 21, 1-25
- ProxSim: GPU-based simulation framework for cross-layer approximate DNN optimization. **C. DE LA PARRA et al.** 2020 Design, Automation & Test in Europe Conference & Exhibition (DATE). IEEE, 2020, 1193-1198
- **K. HE et al.** Deep Residual Learning for Image Recognition. *eprint: 1512.03385*, 2015
- **M. LIN et al.** Network In Network. *eprint: 1312.4400*, 2014
- **Y. LECUN et al.** Gradient-based learning applied to document recognition. *Proc. IEEE*, November 1998, vol. 86 (11), 2278-2324
- **A. KRIZHEVSKY**. *Convolutional Deep Belief Networks on CIFAR-10.*
- The mnist database of handwritten digit images for machine learning research. **L. DENG**. IEEE Signal Processing Magazine. IEEE, 2012, vol. 29, 141-142
- **B. WU et al.** *Model Extraction Attacks on Graph Neural Networks: Taxonomy and Realization*, November 2021, arXiv:2010.12751
- NeuroHammer: inducing bit-flips in memristive crossbar memories. **F. STAUDIGL et al.** Design, Automation & Test in Europe Conference & Exhibition (DATE). IEEE, 2022, 1181-1184
- FACER: A Universal Framework for Detecting Anomalous Operation of Deep Neural Networks. **C. SCHORN et al.** 2020 IEEE 23rd International Conference on Intelligent Transportation Systems (ITSC). IEEE, September 2020, 1-6
- **L. MANKALI et al.** Leveraging Ferroelectric Stochasticity and In-Memory Computing for DNN IP Obfuscation. *IEEE J. Explor. Solid-State Comput. Devices Circuits*, December 2022, vol. 8 (2), 102-110
- **H. KAESLIN**. Top-Down Digital VLSI Design: From Architectures to Gate-Level Circuits and FPGAs. Morgan Kaufmann Publishers Inc., 2014